Europäisches Patentamt

European Patent Office

Office européen des brevets

(11) Veröffentlichungsnummer: **0 075 217**
**B1**

(12) **EUROPÄISCHE PATENTSCHRIFT**

(45) Veröffentlichungstag der Patentschrift: **06.02.91**

(21) Anmeldenummer: **82108347.4**

(22) Anmeldetag: **10.09.82**

(51) Int. Cl.⁵: **C 08 F 222/14,** C 08 F 210/14,
C 10 M 107/10,
C 10 M 107/28,
C 08 L 101/00, H 01 B 3/20 //
C10N30/02, C10N40/04
,(C08F222/14,
210:14),(C08F210/14,
222:14),(C10M107/10,
107:28),(C10M107/28, 107:10)

(54) Copolymere aus Alpha-Beta-ungesättigten Dicarbonsäureestern, Verfahren zu deren Herstellung sowie deren Verwendung.

(30) Priorität: **17.09.81 DE 3136932**
**25.06.82 DE 3223694**

(43) Veröffentlichungstag der Anmeldung:
**30.03.83 Patentblatt 83/13**

(45) Bekanntmachung des Hinweises auf die
Patenterteilung:
**06.02.91 Patentblatt 91/06**

(84) Benannte Vertragsstaaten:
**AT BE CH FR GB IT LI LU NL SE**

(56) Entgegenhaltungen:
**FR-A-2 324 654**
**JP-A-55 157 687**

(73) Patentinhaber: **Akzo Patente GmbH**
**Postfach 10 01 49 Kasinostrasse 19-23**
**D-5600 Wuppertal-1 (DE)**

(72) Erfinder: **Beck, Heinz, Dr. Dipl.-Chem.**
**Marie Juchacz-Strasse 42**
**D-5160 Düren (DE)**
Erfinder: **Frassek, Karl-Heinz**
**Martinusstrasse 16**
**D-5163 Langerwehe (DE)**

(74) Vertreter: **Schalkwijk, Pieter Cornelis et al**
**AKZO N.V., Patent Department (Dept. CO), P.O.**
**Box 9300**
**NL-6800 SB Arnhem (NL)**

Courier Press, Leamington Spa, England.

# EP 0 075 217 B1

**Beschreibung**

Die Erfindung betrifft Copolymere aus α-β-ungesättigten Dicarbonsäureestern mit α-Olefinen, deren Herstellung und deren Verwendung.

Aus der DE—OS—27 27 329 sind Olefin-Maleinsäure-Copolymer-Derivate bekannt, die aus Olefinen mit durchschnittlich 2—24 Kohlenstoffatomen und Maleinsäure aufgebaut sind und mit einwertigen Alkoholen mit einer Kettenlänge von 2—20 Kohlenstoffatomen im Molverhältnis 1:0,5 bis 1:2 Maleinsäure zu Alkohol verestert sind. Hergestellt werden die dort beschriebenen Olefin-Maleinsäure-Copolymer-Derivate durch Copolymerisation von Maleinsäure oder Maleinsäureanhydrid mit α-Olefinen und anschließende Veresterung zum Halb- oder zum Diester. Die dort beschriebenen Olefin-Maleinsäure-Copolymer-Derivate sind als Gleitmittel für die formgebende Verarbeitung von Kunststoffen besonders geeignet. Diese Produkte sind bei Zimmertemperatur halbfest bis fest. Der Pourpoint liegt stets deutlich oberhalb 0°C.

Darüberhinaus sind hochmolekulare Copolymere aus α-Olefinen und α-β-ungesättigten Dicarbonsäureestern beispielsweise als Haarsprays (AU—PS 254 327) und als Mittel zur Beschichtung von Arzneimitteln (AU—PS 263 011) bekannt geworden. Diese wurden durch Copolymerisation von α-Olefinen und α-β-ungesättigten Dicarbonsäuren bzw. -säureanhydriden und nachträgliche Veresterung des Copolymeren hergestellt und sind bei Zimmertemperatur wachsartig bis fest.

Aus der DE—OS 17 70 860 ist ein Copolymerisat aus einem $C_{22}$—$C_{28}$-1-Olefin und Dibehenylmaleat bekannt, welches durch Polymerisation bei 150°C erhalten wurde und als wachsartiges Produkt beschrieben ist. Es wurde vorgeschlagen, das Produkt Kohlenwasserstoffen zuzusetzen, um den Stockpunkt zu erniedrigen bzw. insgesamt die Fließfähigkeit zu verbessern.

In der genannten DE—OS 17 70 860 wird festgestellt, daß sich die Fließfähigkeitsverbesserung nur mit solchen Ester-Polymeren erzielen läßt, bei denen die Zahl der Kohlenstoffatome in dem Alkylteil des Esters mehr als 20 beträgt.

In der AU-PS 479 746 sind Fließfähigkeitsverbesserer für wachsartige Kohlenwasserstofföle beschrieben, die eine Senkung des Pourpoints de Kohlenwasserstofföle bewirken. Auch hier sind ausdrücklich lange Seitenketten für die Alkoholkomponente der Dicarbonsäureester als unbedingt erforderlich beschrieben worden. Die Konstistenz der Produkte bei Zimmertemperatur ist wachsartig bis fest. Der Pourpoint liegt also auch hier deutoberhalb 0°C.

Die japanische Offenlegung 55—157 687 beschreibt ein Copolymeres aus einem α-Olefin und einem Dialkylester einer α-β-ungesattigten Dicarbonsäure als Additiv für Schmiermittel.

Die α-β-ungesättigten Dicarbonsäuren sind praktisch Maleinsäuren oder Fumarsäure. Mischungen davon werden nicht beschrieben.

Die Alkoholkomponente soll 1 bis 18 Kohlenstoffatome aufweisen, vorzugsweise 1 bis 8; ganz bevorzugt wird Methanol eingesetzt. Die Alkohole können verzweigt oder unverzweigt sein. Von einem Gemisch ist keine Rede.

Die α-Olefine haben 4 bis 60 Kohlenstoffatome, wobei die Copolymeren aus α-Olefinen mit 4 bis 18 Kohlenstoffatomen bei Raumtemperatur flüssig sind. Der Pourpoint liegt bei den Gemischen aus α-Olefinen mit 6—10 Kohlenstoffatomen bei 38 bis 40°C und aus α-Olefinen mit 16—18 Kohlenstoffatomen je nach Alkohol zwischen 6 bis 7°C und −17 bis −18°C. Das Copolymere aus α-Olefinen mit 12—14 Kohlenstoffatomen hat einen Pourpoint bei 12 bis 13°C (s. Tabelle 1, Versuch 2).

Die flüssigen Copolymere zeigen sowohl unverdünnt als auch in Mineralöl gelöst ausgezeichnete Öl-Eigenschaften, sei es als Schmiermittel, als Maschinenöl, als Turbinenöl oder als Öl zur Metallverformung (Seite 7, unten). Die Öl-Eigenschaften und die Abriebfestigkeit nahmen zu, wenn die Anzahl der Kohlenstoffatome der Alkoholkomponente abnimmt. Daher wird ganz bevorzugt Methanol eingesetzt (Seite 4, Absatz 2). Der Pourpoint nimmt dabei zu. So steigt er von −17 bis −18°C auf 6 bis 7°C beim Übergang von Oktanol auf Methanol.

Angestrebt werden seit langem Schmieröle, welche bereits ohne Zusätze einen niedrigen Pourpoint aufweisen und über einen möglichst breiten Temperaturbereich eine möglichst kleine Viskositätsänderung zeigen.

Die erfindungsgemäße Lösung ist den Patentansprüche zu entnehmen.

Die erfindungsgemäßen Polymeren werden den gestellten Anforderungen in weitem Umfange gerecht, so daß sie als solche bereites hervorragende Schmieröle sind.

In bevorzugter Weise sind die Copolymeren so aufgebaut, daß α-β-ungesättigte Dicarbonsäureester α-β-ungesättigte Dicarbonsäure-diester sind. Als α-β-ungesättigte Dicarbonsäureester Kommen die Ester von Maleinsäure, Fumarsäure, Citraconsäure, Mesaconsäure oder Itaconsäure in Betracht. Bevorzugt sind jedoch die Ester der Maleinsäure und der Fumarsäure.

Geringe Pourpoints weisen die Copolymeren auf, bei denen das α-Olefin unverzweigt ist, als die Copolymeren, deren α-Olefin verzweigt sind. Deshalb sind für die erfindungsgemäßen Copolymeren solche bevorzugt deren α-Olefinenbestandteil unverzweigt ist. Das Molverhältnis α-Olefin zu α-β-ungesättigten Dicarbonsäureestern beträgt vorzugsweise 0,5—4.

Es war völlig unerwartet, daß mit Hilfe des erfindungsgemäßen Verfahrens sich die erfindungsgemäßen flüssigen Copolymere aus α-Olefinen mit 10—16 C-Atomen und α-β-ungesättigten Dicarbonsäureestern, deren Alkoholkomponente geradkettige und/oder verzweigte Monoalkohole mit

2

3—10 Kohlenstoffatomen aufgebaut sind und die gegebenenfalls vernetzt sind herstellen lassen, die flüssig sind und daß sie die Fließeigenschaften und Viskositätseigenschaften von Mineralölen und Schmiermitteln wesentlich stärker verbessern, als die bekannten hochmolekularen Copolyeren aus sehr langkettigen α-Olefinen und α-β-ungesättigten Dicarbonsäureestern mit langkettigen Alkoholkomponenten. Das erfindungsgemäße Verfahren ist dadurch gekennzeichnet, das α-Olefine mit 10—16 C-Atomen und α-β-ungesättigten Dicarbonsäureestern, deren Alkoholkomponente geradkettige und/oder verzweigte Monoalkohole mit 3—10 Kohlenstoffatomen bei Temperaturen von 140—210°C in Gegenwart eines Peroxidkatalysators in Inertgasatmosphäre copolymerisiert werden.

Vorzugsweise werden α-β-ungesättigten Dicarbonsäure-diester eingesetzt und im besonderen die Maleinsäurediester und/oder Fumarsäurediester.

Besonders gute Fließ- und Viskositätseigenschaften der Copolymeren werden dann erzielt, wenn 0,005 Mol/Mol Monomer bis 0,05 Mol/Mol Monomer an Peroxidkatalysator zugegeben werden. Vorzugsweise wird der Peroxidkatalysator in Zeitabständen portionsweise zugegeben. In Ausgestaltung der Erfindung erfolgt die Zugabe des Peroxidkatalysators so, daß zunächst durch Zugabe eines Drittels der Peroxidkatalysatormenge gestartet wird und die Restmenge an Peroxidkatalysator in 8—12 Portionen zugegeben wird. Besonders bevorzugte α-β-ungesättigten Dicarbonsäureester sind α-β-ungesättigten Dicarbon-säure-dioctylester und α-β-ungesättigten Dicarbonsäure-dihexylester. Die Reaktionstemperatur beträgt vorzugsweise 160—200°C.

Um zu Molverhältnissen α-Olefin zu α-β-ungesättigten Dicarbonsäureester von 0,5—4 im Polymeren zu gelangen, werden die Monomeren im Molverhältnis 0,5—7 eingesetzt.

Die erfindungsgemäßen Copolymeren sind nicht nur aufgrund ihres Viskositätsverhaltens, ihrer Emulgierfähigkeit und ihres geringeren Pourpoints als Schmieröle verwendbar. Sie können auch als Additive zur Einstellung des Viskositätsverhaltens und zur Verringerung des Pourpoints bei Mineralölen und Schmiermitteln eingesetzt werden. Insbesondere sind als Additive die vernetzten Copolymeren besonders geeignet. Dabei kommen als Vernetzer alle bekannten bifunktionellen Vernetzer in Frage, beispielsweise Divinylbenzol und Bisacrylate. Bevorzugt werden aber Bis-Maleate von Dialkoholen, Bis-Maleinimide, Diallyläther, Diallylester und/oder Divinylester. Es können auch Gemische von Vernetzern eingestzt werden. Zweckmäßig werden 0,05—0,2 Mol/Mol α-β-ungesättigter Dicarbonsäureester dem Polymerisationsansatz zugegeben.

Erfindungsgemäße vernetzte Copolymere sind unmittelbar als Getriebeöle oder zur Verbesserung des Viskositätsverhaltens von Schmiermitteln einsetzbar.

Erfindungsgemäße vernetzte Copolymere erfüllen auch in vollem Umfange die hohen Anforderungen, die an Transformatorenöle gestellt werden, wie Alterungsbestandigkeit, Stabilitat, niedriger Pourpoint, keine meßbare Gasabspaltung, hohe Durchschlagfestigkeit, geringer dielektrischer Verlustfaktor. Aber auch die geringe Toxizität, verglichen mit den als Transformatorenöle gebräuchlichen chlorierten Diphenylen, die zur Absenkung der Viskosität mit Trichlorbenzolen abgemischt werden, ist ein beachtlicher Vorteil der erfindungsgemässen Copolymere bei ihrem Eiinsatz als Transformatorenöle. Selbstverständlich sind sie ganz allgemein als Isolieröle einsetzbar, wobei beispielsweise die Copolymeren mit sehr niedrigen Pourpoint und geringer Viskosität hervorrangende Schalteröle darstellen. Hinsichtlich der üblichen Meßmethoden wird auf Ullmanns Encylopädie der technischen Chemie, 4. Auflage, Band 20, Seite 607 ff verweisen.

Als weiteres Einsatzgebiet für die erfindungsgemäßen Copolymeren sind vor allem Gleitmittel für die formgebende Verarbeitung von thermoplastischen Kunststoffen zu nennen.

Der flüssige Zustand bei Zimmertemperatur läßt eine sehr gute Mischbarkeit mit anderen Verarbeitungshilfsstoffen zu. Insbesondere lassen sich mit den erfindungsgemäßen Copolymeren Stabilisator-Gleitmittelgemische für die PVC-Verarbeitung herstellen, die mit anderen Gleitmitteln nicht ohne weiteres möglich sind.

Die erfindungsgemäßen Copolymere sind emulgierbar und ergeben stabile Emulsionen. Sie sind daher im Gemisch mit Wachsen und mit den Copolymeren gemäß DE—OS 27 27 329 in Polierwachspräparaten wie beispielsweise Schuhpflegemittel, Bodenpflegemittel, Gleitmittel für die Metallbearbeitung u.ä. verwendbar. In wäßrigen Emulsionen können sie auch als Kühlmittel für die spannabhebende und sonstige Verformung von Metallteilen dienen.

Anhand der nachfolgenden Beispiele wird die Erfindung näher erläutert.

Beispiel 1

1 Mol Maleinsäureanhydrid, 3 Mol Alfol C8 und 0,4 g p-Toluolsulfonsäure werden bis zum Siedepunkt des Gemisches aufgeheizt und das Reaktionswasser (ca. 1 Mol) abgezogen. Nach etwa 4 1/2 Stunden betrug die Säurezahl nur noch 0,44. Das Reaktionsgemisch wurde auf 100°C abgekühlt, 1 ml Triäthylamin hinzugefügt und bei dieser Temperatur ca. 30 min. gerührt. Durch Anlegen eines Vakuums wurde das überschüssige Alfol und Amin abdestilliert. Dem erhaltenen Reaktionsprodukt wurde 1 Mol $C_{12}$ α-Olefin hinzugefügt. Es wurde auf 160°C aufgeheizt und 10 Portionen von 0,005 Mol Di-tert.-Butylperoxid im Abstand von ca. 30 Minuten zugegeben. 30 Minuten nach der letzten Peroxidzugabe wird Vakuum angelegt und sas nicht polymerisierte Olefin abdestilliert. Der letzte Rest Olefin wurde in einem Dünnschichtverdampfer entfernt.

Das Verhältnis Olefin zu Ester im Copolymeren wurde aus dem Sauerstoffgehalt der Elementaranalyse bestimmt.

Die Viskosität wurde mi einem Ubbelohde-Viskosimeter gemessen.

Das Molekulargewicht wurde mit-Hilfe der Gelpermeationschromatographie bestimmt.

Für die Bestimmung des Pourpoints wurde nach der Vorschrift DIN pr En 6 gearbeitet.

Die Bestimmung des Viskositätindexes erfolgte nach dem Verfahren B der ISO-Norm 29 09.

Unter dem Monomerenverhältnis soll das Molverhältnis eingesetztes α-Olefin zu eingesetztem α-β-ungesättigtem Dicarbonsäureester verstanden werden.

Mit Polymerenverhältnis soll das Verhältnis von α-Olefin zu α-β-ungesättigtem Dicarbonsäureester in Copolymerisat ausgedrückt werden.

Dasim Beispiel erhaltene Copolymerisat hatte einen Pourpoint von −39°C, ein Molekulargewicht von 2500 und einen Viskositätsindex von 168.

Beispiel 2

In ein mit Stickstoff gespültes geeignetes Reaktionsgefäß wurden 6 Mole $C_{10}$-α-Olefin und 2 Mole Dibutylmaleat gegeben und unter Stickstoffatmosphäre gehalten. Das Gemisch wurde auf 200°C erhitzt. Als Katalysator wurde t-Butylhydroperoxid verwendet und zunächst 0,03 Mol t-Butylhydroperoxid und später 10 mal 0,004 Mol portionsweise zugesetzt. Nach beendeter Polymerisation wurde überschüssiges Olefin und Dibutylmaleat im Vakuum bei 0,01 mm Hg abdestiliiert.

Die Ergebnisse mit anderen Olefinen sowie mit dem Molverhälnis 1:1 Olefin zu Dibutylmaleat sind in der nachfolgen Tabelle zusammengestellt.

T a b e l l e  1

| Versuch | Olefin | Monomer Verhältnis | Polymer Verhältnis | MG | VI | Pourpoint °C |
|---|---|---|---|---|---|---|
| 1A | $C_{10}$ | 3 : 1 | 1,35 | 1500 | 121 | -29 |
| 1B | $C_{12}$ | 3 : 1 | 1,85 | 1320 | 139 | -42 |
| 1C | $C_{14}$ | 3 : 1 | 1,90 | 1400 | 146 | -20 |
| 1D | $C_{16}$ | 3 : 1 | 1,91 | 1600 | 152 | -9 |
| 1E | $C_{10}$ | 1 : 1 | 0,96 | 1350 | 127 | -31 |
| 1F | $C_{12}$ | 1 : 1 | 0,92 | 1320 | 127 | -42 |
| 1G | $C_{14}$ | 1 : 1 | 0,83 | 1280 | 133 | -32 |
| 1H | $C_{16}$ | 1 : 1 | 0,94 | 1370 | 132 | -18 |

### Beispiel 3

Entsprechend Beispiel 1 wurden Maleinsäure-diester mit $C_{10}$-α-Olefin und $C_{14}$-α-Olefin im Molverhältnis 1:1 und 1:3 unter sonst gleichen Bedingungen copolymerisiert. Die Ergebnisse sind in Tabelle 2 zusammengestellt. Als Vergleich wurde auch Dimethylmaleat mit $C_{10}$-α-Olefin unter den gleichen Bedingungen im Verhältnis 1:1 und 1:3 copolymerisiert. Die Ergebnisse zeigen, daß dabei Copolymerisate entstehen, deren Pourpoint deutlich oberhalb 0°C liegt. Mit $C_{14}$-α-Olefin im Verhältnis 1:1 erhält man einen Pourpoint von zwar −4°C aber auch nur einen Viskositätsindex von 69.

EP 0 075 217 B1

T a b e l l e  2

| Vers.-Nr. | C-Atome im -Olefin | C-Atome des Ester-alkohols | Monomer Verhältn. | Polymer Verhältn. | MG | VI | Pourpoint °C |
|---|---|---|---|---|---|---|---|
| 2A | 10 | 4 | 3 | 1,35 | 1500 | 121 | -29 |
| 2B | 10 | 6 | 3 | 1,10 | 1650 | 152 | -48 |
| 2C | 10 | 8 | 3 | 0,93 | 2300 | 149 | -35 |
| 2D | 10 | 4 | 1 | 0,96 | 1350 | 127 | -31 |
| 2E | 10 | 6 | 1 | 0,85 | 1580 | 150 | -32 |
| 2F | 10 | 8 | 1 | 0,63 | 2000 | 133 | -35 |
| 2G | 14 | 4 | 3 | 1,90 | 1400 | 146 | -20 |
| 2H | 14 | 6 | 3 | 1,58 | 1400 | 147 | -33 |
| 2I | 14 | 8 | 3 | 1,86 | 1750 | 144 | -31 |
| 2K | 14 | 4 | 1 | 0,38 | 1280 | 133 | -32 |
| 2L | 14 | 6 | 1 | 0,77 | 1520 | 135 | -24 |
| 2M | 14 | 8 | 1 | 0,88 | 1880 | 134 | -20 |
| 2V1 | 10 | 1 | 3 | 0,79 | 1500 | 72 | +7 |
| 2V2 | 10 | 1 | 1 | 0,69 | 2800 | - | fest - |
| 2V3 | 14 | 1 | 1 | 0,54 | 1300 | 69 | -4 |

Beispiel 4

Entsprechend der im Beispiel 1 angegebenen Verfahrensweise wurden Octylfumarate und Octylmaleate, sowie Hexylfumarate und Hexylmaleate mit $C_{10}$- und $C_{12}$-$\alpha$-Olefinen copolymerisiert. Diese Ergebnisse sind in Tabelle 3 zusammengestellt.

Tabelle 3

| Vers.-Nr. | C-Atome im $\alpha$-Olefin | Ester | Monomer Verhältn. | Polymer Verhältn. | MG | VI | Pourpoint °C |
|-----------|---------------------------|-------|-------------------|-------------------|------|-----|--------------|
| 3A | 10 | Octyl-Fumarat | 1 | 0,89 | 3250 | 173 | -35 |
| 3B | 10 | Octyl-Maleat | 1 | 0,93 | 2300 | 149 | -35 |
| 3C | 12 | Octyl-Fumarat | 1 | 0,69 | 2350 | 161 | -33 |
| 3D | 12 | Octyl-Maleat | 1 | 0,63 | 2000 | 133 | -35 |
| 3E | 10 | Octyl-Fumarat | 3 | 1,38 | 3000 | 169 | -26 |
| 3F | 10 | Octyl-Maleat | 3 | 1,10 | 1650 | 152 | -48 |
| 3G | 12 | Octyl-Fumarat | 3 | 1,73 | 2300 | 157 | -33 |
| 3H | 12 | Octyl-Maleat | 3 | 1,84 | 1500 | 146 | -38 |

EP 0 075 217 B1

### Beispiel 5

36 Mole $C_{14}$—$C_{16}$-$\alpha$-Olefin wurden mit 2-Äthylhexylmaleat in einem Reaktor gemischt, mit Sticktoff gespült und auf 200°C erhitzt. Im Abstand von 30 Minuten wurden 11 Portionen mit jeweils 0,08 Mol Di.-t.-Butylperoxid hinzugefügt. 30 Minuten nach der letzten Peroxidzugabe wurden die flüchtigen Produkte bei zunehmendem Vakuum abdestilliert. Nach diesem Verfahren wurden weitere Copolymere hergestellt, die mit ihren Meßdaten in der Tabelle 4 zusammengestellt sind.

### T a b e l l e 4

| Vers.-Nr. | Ester | Monomer Verhältn. | Polymer Verhältn. | MG | Pourpoint °C |
|---|---|---|---|---|---|
| 4A | 2-Äthylhexyl-maleat | 1 | 0,6 | 1500 | −39 |
| 4B | dito | 3 | 1,4 | 1450 | −30 |
| 4C | Dibutylmaleat | 1 | 0,78 | 1600 | −29 |
| 4D | 2-Äthylhexyl-fumarat | 1 | 0,7 | 1700 | −29 |
| 4E | Dibutylfumarat | 1 | 0,7 | 1700 | −23 |

### Beispiel 6

3 Mol Maleinsäureanhydrid 0,6 Mol Hexan-diol-1,6, und 480 ml Toluol werden eine halbe Stunde lang am Rückfluß gekocht. Dann werden 9 Mol Butanol und 1,2 g p-Toluolsulfonsäure zugegeben und das Reaktionswasser ausgekreist. Nachdem sich kein Wasser mehr abscheidet, werden 3 ml Triäthylamin zur Neutralisation zugegeben, eine halbe Stunde gerührt und alles Flüchtige im Wasserstrahlvakuum bis zu einer Sumpftemperatur von 160°C abdestilliert. Dann werden 3 Mol $C_{12}$-$\alpha$-Olefin zugegeben, das Reaktionsgefäß mit Stickstoff gespült, auf 160°C erhitzt und alle 30 Minuten je 0,016 Mol Di.-t.-Butylperoxid, insgesamt 10 Portionen, zugegeben. 30 Minuten nach der letzten Zugabe wird im Wasserstrahlvakuum alles Flüchtige abdestilliert. Das entstandene vernetzte Polymer hat folgende Eigenschaften:

VI = 179
Pourpoint = −12°C

### Beispiel 7

2 Mol Dibutylfumarat, 2 Mol $C_{14}$—$C_{16}$-$\alpha$-Olefin (Gemisch. Durchschnitts-MG = 205) und 0,2 Mol Divinylbenzol (50%ig in Äthylvinylbenzol) werden unter Stickstoff auf 160°C erhitzt, und alle 30 Minuten je 0,01 Mol Di.-t.-Butylperoxid zugegeben, insgesamt 10 Portionen. 30 Minuten nach der letzten Zugabe werden alle flüchtigen Anteile im Wasserstrahlvakuum abdestilliert. Das zurückbleibende vernetzte Polymer hat folgende Eigenschaften:

VI = 211
Pourpoint = −2°C

### Beispiel 8

Die Eignung der Copolymeren als Gleitmittel zeigte sich auch beim Dauerwalztest. Dazu wurden Gemische aus 100 Gewichtsteilen eines Suspensions PVC, 1 Gewichtsteil Dioctylzinn-bis-2äthyl-hexylthioglykolat, 0,5 bzw. 1 Gewichtsteil des Copolymeren bzw. eines handelsüblichen Gleitmittels hergestellt. Für den Dauerwalztest wurden folgende Bedingungen eingestellt:

Rollentemperatur 180°C
Drehzal 20 U/min.

Alle 10 min. wurden Proben entnommen und der Test wurde abgebrochen, wenn die Probe an der Rolle klebte oder wenn eine braune Verfärbung beobachtet wurde. Die Ergebnisse sind in der nachfolgenden Tabelle 5 zusammengestellt.

Eine nach dem zuvor beschriebenen Rezept hergestellte Probe wurde innerhalb von 10 Minuten durch Walzen bei 170°C zu einem Fell mit einer Dicke von 0,4 mm gebracht. Die Probe wurde in einen Ofen, der auf 180°C gehalten wurde, mit drehenden Fächern gegeben. Die Verfärbung wurde alle 10 min. untersucht und mit einer entsprechenden Probe eines handelsüblichen Gleitmittels (Äthylenglykolester von Montansäure) verglichen, bis die Endverfärbung erreicht war (Ofentest).

Ein Fell von 0,4 mm Dicke wurde wie zuvor beschrieben hergestellt, geschnitten und durch Aufeinanderlegen von etwa 20 Schichten zu einer Dicke von ca. 6 mm gepreßt. Die Transparenz wurde in einem Kolorimeter "Hunterlab D25" gemessen.

Auch die Werte vom Ofentest und der Transparenz sind in der Tabelle 5 mit aufgeführt.

### Tabelle 5

| Probe | Ofentest bei 180 °C (min.) | Transparenz (%) | Zeit bis zum Kleben bzw. Verfärben (Minuten) |
|---|---|---|---|
| 4C | 130 | 82 | 80 (klebt nicht) |
| 4D | 130 | 75,6 | 100 (klebt nicht) |
| 4E | 130 | 79,2 | 90 (klebt nicht) |
| I | 110 | 65,0 | 90 (klebt nicht) |

### Beispiel 9

Es wurde die Transparenz einiger der Copolymeren mit einem handelsüblichen Gleitmittel in der Anwendung auf weichgemachtes Suspensions PVC gemessen.

Die Mischungen aus 100 Gewichtsteilen Suspensions PVC, 50 Gewichtsteilen Dioctylphthalat, 1 Gewichtsteil Dibutylzinndimonomethylmaleat und 1 Gewichtsteil eines erfindungsgemäßen Copolymeren bzw. des handelsüblichen Gleitmittels wurde gemischt und wie im Beispiel 7 beschrieben zu Probeplättchen von ca. 6 mm Dicke verarbeitet.

Es wurden folgende Transparenzen ermittelt:

| Probe | Transparenz % |
|---|---|
| 4A | 67,7 |
| 4B | 54,4 |
| I | 41,5 |

Aus den Beispielen 8 und 9 bei der Anwendung als Gleitmittel für die formgebende Verarbeitung von Kunststoffen ergibt sich folgender Befund:

Im Ofentest sind alle geprüften Copolymeren besser als das zum Vergleich herangezogene handelsübliche Gleitmittel.

Im Dauerwalztest sind die geprüften Copolymeren gleichwertig oder besser als das zum Vergleich herangezogene handelsübliche Gleitmittel.

In der Transparenz sind die geprüften Copolymeren alle weit besser als das zum Vergleich herangezogene handelsübliche Gleitmittel.

**Patentansprüche für die Vertragsstaaten: BE CH FR GB IT LI LU NL SE**

1. Copolymere aus α-Olefinen mit 10—16 C-Atomen — rein oder im Gemisch — und aus α-β-ungesättigten Dicarbonsäureestern, deren Alkoholkomponente geradkettige und/oder verzweigte Monoalkohole mit 3—10 Kohlenstoffatomen sind, aufgebaut und gegebenenfalls vernetzt und mit einem Pourpoint zwischen −60°C und 0°C. der bei unvernetzten Copolymeren −9°C und niedriger ist, wenn die Alkohole 4 und weniger Kohlenstoffatome aufweisen, und −20°C und niedriger ist, wenn die Alkohole mehr als 4 C-Atome aufweisen.

2. Copolymere nach Anspruch 1, dadurch gekennzeichnet, daß die α-β-ungesättigten Dicarbonsäureester, α-β-ungesättigte Dicarbonsäure-diester sind.

3. Copolymere nach den Ansprüchen 1—2, dadurch gekennzeichnet, daß die α-β-ungesättigten Dicarbonsäureester Maleinsäureester und/oder Fumarsäureester sind.

4. Copolymere nach den Ansprüchen 1—3, dadurch gekennzeichnet, daß die α-Olefine unverzweigt sind.

5. Copolymere nach den Ansprüchen 1—4, dadurch gekennzeichnet, daß das Molverhältnis α-Olefin zu α-β-ungesättigter Dicarbonsäureester 0,5—4 beträgt.

6. Verfahren zur Herstellung der Copolymeren aus α-β-ungesättigten Dicarbonsäureestern mit α-

Olefinen nach den Ansprüchen 1—5, dadurch gekennzeichnet, daß α-Olefine mit 10—16 C-Atomen und α-β-ungesättigten Dicarbonsäureestern, deren Alkoholkomponente geradkettige und/oder verzweigte Monoalkohole mit 3—10 Kohlenstoffatomen sind, gegebenenfalls unter Zusatz von Vernetzern, bei Temperaturen von 140—210°C und in Gegenwart eines Peroxidkatalysators in Inertgasatmosphäre copolymerisiert werden.

7. Verfahren nach Anspruch 1, dadurch gekennzeichnet, daß als α-β-ungesättigte Dicarbonsäureester, α-β-ungesättigte Dicarbonsäurediester als Monomer eingesetzt werden.

8. Verfahren nach den Ansprüchen 6—7, dadurch gekennzeichnet, daß als α-β-ungesättigte Dicarbonsäureester Maleinsäureester und/oder Fumarsäureester eingesetzt werden.

9. Verfahren nach den Ansprüchen 6—8, dadurch gekennzeichnet, daß unverzweigte α-Olefine eingesetzt werden.

10. Verfahren nach den Ansprüchen 6—9, dadurch gekennzeichnet, daß 0,005 Mol/Mol Monomer bis 0,05 Mol/Mol Monomer an Peroxidkatalysator zugegeben werden.

11. Verfahren nach den Ansprüchen 6—10, dadurch gekennzeichnet, daß der Peroxidkatalysator in Zeitabständen portionsweise zugegeben wird.

12. Verfahren nach Anspruch 11, dadurch gekennzeichnet, daß die Copolymerisation durch Zugabe eines Drittels de Gesamtmenge an Peroxidkatalysator gestartet wird und die Restmenge an Peroxidkatalysator in 8—12 Portionen zugegeben wird.

13. Verfahren nach den Ansprüchen 6—12, dadurch gekennzeichnet, daß als α-β-ungesättigte Dicarbonsäureester α-β-ungesättigter Dicarbonsäure-dioctylester und/oder α-β-ungesättigter Dicarbonsäuredihexylester eingesetzt werden.

14. Verfahren nach den Ansprüchen 6—13, dadurch gekennzeichnet, daß die Reaktionstemperatur 160—200°C beträgt.

15. Verfahren nach den Ansprüchen 6—14, dadurch gekennzeichnet, daß α-Olefin und α-β-ungesättigte Dicarbonsäureester im Molverhältnis 0,5—7 eingesetzt werden.

16. Verfahren nach den Ansprüchen 6—15, dadurch gekennzeichnet, daß als Vernetzer Bis-Maleate von Dialkoholen, Bis-Maleinimide, Diallyläther, Diallylester, Divinylester und/oder Divinyläther zugegeben werden.

17. Verwendung der Copolymeren nach den Ansprüchen 1—4, als Schmieröle.

18. Verwendung der Copolymeren nach den Ansprüchen 1—4 als Mineralöl-Additive.

19. Verwendung der Copolymeren nach den Ansprüchen 1—4 als Schmiermittel-Additive.

20. Verwendung der Copolymeren nach den Ansprüchen 1—4 als Gleitmittel für die formgebende Verarbeitung von thermoplastischen Kunststoffen.

21. Verwendung der Copolymeren nach den Ansprüchen 1—4 als Transformatorenöle.


**Patentansprüche für den Vertragsstaat: AT**

1. Verfahren zur Herstellung der Copolymeren aus α-β-ungesättigten Dicarbonsäureestern mit α-Olefinen mit einem Pourpoint zwischen −60° und 0°C, dadurch gekennzeichnet, daß α-Olefine mit 10—16 C-Atomen und α-β-ungesättigten Dicarbonsäureesten, deren Alkoholkomponente geradkettige und/oder verzweigte Monoalkohole mit 3—10 Kohlenstoffatomen sind, gegebenenfalls unter Zusatz von Vernetzern, bei Temperaturen von 140—210°C und in Gegenwart eines Peroxidkatalysators in Inertgasatmosphäre copolymerisiert werden.

2. Verfahren nach Anspruch 1, dadurch gekennzeichnet, daß als α-β-ungesättigte Dicarbonsäureester α-β-ungesättigte Dicarbonsäure-diester als Monomer eingesetzt werden.

3. Verfahren nach den Ansprüchen 1—2, dadurch gekennzeichnet, daß als α-β-ungesättigte Dicarbonsäureester Maleinsäureester und/oder Fumarsäureester eingesetzt werden.

4. Verfahren nach den Ansprüchen 1—3, dadurch gekennzeichnet, daß unverzweigte α-Olefine eingesetzt werden.

5. Verfahren nach den Ansprüchen 1—4, dadurch gekennzeichnet, daß 0,005 Mol/Mol Monomer bis 0,05 Mol/Mol Monomer an Peroxidkatalysator zugegeben werden.

6. Verfahren nach den Ansprüchen 1—5, dadurch gekennzeichnet, daß der Peroxidkatalysator in Zeitabständen portionsweise zugegeben wird.

7. Verfahren nach Anspruch 6, dadurch gekennzeichnet, daß die Copolymerisation durch Zugabe eines Drittels de Gesamtmenge an Peroxidkatalysator gestartet wird und die Restmenge an Peroxidkatalysator in 6—12 Portionen zugegeben wird.

8. Verfahren nach den Ansprüchen 1—7, dadurch gekennzeichnet, daß als α-β-ungesättigte Dicarbonsäureester α-β-ungesättigter Dicarbonsäure-dioctylester und/oder α-β-ungesättigter Dicarbonsäuredihexylester eingesetzt werden.

9. Verfahren nach den Ansprüchen 1—8, dadurch gekennzeichnet, daß die Reaktionstemperatur 160—200°C beträgt.

10. Verfahren nach den Ansprüchen 1—9, dadurch gekennzeichnet, daß α-Olefin und α-β-ungesättigte Dicarbonsäureester im Molverhältnis 0,5—7 eingesetzt werden.

11. Verfahren nach den Ansprüchen 6—10, dadurch gekennzeichnet, daß als Vernetzer Bis-Maleate von

# EP 0 075 217 B1

Dialkoholen, Bis-Maleinimide, Diallyläther, Diallylester, Divinylester und/oder Divinyläther zugegeben werden.

12. Verwendung der Copolymeren erhalten nach den Ansprüchen 1 bis 11 als Schmieröle.

13. Verwendung der Copolymeren erhalten nach den Ansprüchen 1 bis 11 als Mineralöl-Additive.

14. Verwendung der Copolymeren erhalten nach den Ansprüchen 1 bis 11 als Schmiermittel-Additive.

15. Verwendung der Copolymeren erhalten nach den Ansprüchen 1 bis 11 als Gleitmittel für die formgebende Verarbeitung von thermoplastischen Kunststoffen.

16. Verwendung der Copolymeren erhalten nach den Ansprüchen 1 bis 11 als Transformatorenöle.

**Revendications pour les Etats contractants: BE CH FR GB IT LI LU NL SE**

1. Copolymères d'α-oléfines ayant de 10—16 atomes de carbone — pures ou en mélange — et d'esters d'acides dicarboxyliques α-β-insaturés, dont le composant alcool est constitué de monoalcools à chaîne droite et/ou ramifiée ayant de 3 à 10 atomes de carbone et qui sont éventuellement réticulés et présentent un point d'écoulement de −60 à 0°C, lequel, dans le cas des copolymères non-réticulés, est de −9°C et moins quand les alcools ont au plus 4 atomes de carbone, et est de −20°C et moins quand les alcools ont plus de 4 atomes de carbone.

2. Copolymères selon la revendication 1, caractérisés en ce que les esters d'acides dicarboxyliques, α,β-insaturés sont des diesters d'acides dicarboxyliques, α,β-insaturés.

3. Copolymères selon les revendications 1—2, caractérisés en ce que les esters d'acides dicarboxyliques, α,β-insaturées sont des maléates et/ou des fumarates.

4. Copolymères selon les revendications 1—3, caractérisés en ce que les α-oléfines ne sont pas ramifiées.

5. Copolymères selon les revendications 1—4, caractérisés en ce que le rapport en moles α-oléfine/esters d'acides dicarboxyliques α,β-insaturés est de 0,5 à 4.

6. Procédé de préparation des copolymères d'esters d'acides dicarboxyliques α,β-insaturés avec des oléfins selon les revendications 1—5, caractérisé en ce que des α-oléfines ayant de 10 à 16 atomes de carbone et des esters d'acides dicarboxyliques α,β-insaturés, dont le composant alcool est constitué de monoalcools à chaîne droite et/ou ramifiée ayant de 3 à 10 atomes de carbone, sont éventuellement copolymérisées avec addition d'agents de réticulation, à des températures de 140 à 210°C et en présence d'un catalyseur à base d'un peroxyde, dans une atmosphère d'un gaz inerte.

7. Procédé selon la revendication 6, caractérisé en ce qu'on utilise comme monomère, en tant qu'esters d'acides dicarboxyliques, α,β-insaturés, des diesters d'acides dicarboxyliques α,β-insaturés.

8. Procédé selon les revendications 6—7, caractérisé en ce qu'on utilise comme esters d'acides dicarboxyliques, α,β-insaturés des maléates et/ou fumarates.

9. Procédé selon les revendications 6—8, caractérisé en ce qu'on utilise des α-oléfines à chaîne droite.

10. Procédé selon les revendications 6—9, caractérisé en ce qu'on ajoute de 0,005 à 0,05 mole de catalyseur peroxydique par mole de monomère.

11. Procédé selon les revendications 6—10, caractérisé en ce que le catalyseur peroxydique est ajouté par portions selon une certaine périodicité.

12. Procédé selon la revendication 11, caractérisé en ce que la copolymérisation est amorcée par addition d'un tiers de la quantité totale du catalyseur peroxydique, le reste de catalyseur peroxydique étant ajouté en 8—12 portions.

13. Procédé selon les revendications 6—12, caractérisé en ce qu'on utilise comme esters d'acides dicarboxyliques α,β-insaturés des esters dioctyliques d'acides dicarboxyliques α,β-insaturés et/ou des esters dihexyliques d'acides dicarboxyliques α,β-insaturés.

14. Procédé selon les revendications 6—13, caractérisé en ce que la température de réaction est de 160 à 200°C.

15. Procédé selon les revendications 6—14, caractérisé en ce que l'α-oléfines et l'ester d'acide dicarboxylique α,β-insaturé sont utilisés selon un rapport en moles de 0,5—7.

16. Procédé selon les revendications 6—15, caractérisé en ce qu'on ajoute comme agents de réticulation des bismaléates de dialcool, des bismaléinimides, du diallyléther, un ester diallylique, un ester divinylique et/ou du divinyléther.

17. Utilisation des copolymères selon les revendications 1—4 comme huiles lubrifiantes.

18. Utilisation des copolymères selon les revendications 1—4 comme additifs pour huiles minérales.

19. Utilisation des copolymères selon les revendications 1—4 comme additifs pour lubrifiants.

20. Utilisation des copolymères selon les revendications 1—4 comme lubrifiants ou produits de démoulage pour la mise en oeuvre de moulages de matières thermoplastiques.

21. Utilisation des copolymères selon les revendications 1—4 comme huiles pour transformateurs.

**Revendications pour l'Etat contractant: AT**

1. Procédé de préparation des copolymères d'esters d'acides dicarboxyliques α,β-insaturés avec des α-oléfins ayant un point d'écoulement compris entre −60 et 0°C, caractérisé en ce que des α-oléfines ayant de 10 à 16 atomes de carbone et des esters d'acides dicarboxyliques α,β-insaturés, dont le composant alcool

13

est constitué de monoalcools à chaîne droite et/ou ramifiée ayant de 3 à 10 atomes de carbone, sont éventuellement copolymérisées avec addition d'agents de réticulation, à des températures de 140 à 210°C et en présence d'un catalyseur à base d'un peroxyde, dans une atmosphère d'un gaz inerte.

2. Procédé selon la revendication 1, caractérisé en ce qu'on utilise comme monomère, en tant qu'esters d'acides dicarboxyliques α,β-insaturés, des diesters d'acides dicarboxyliques α,β-insaturés.

3. Procédé selon les revendications 1—2, caractérisé en ce qu'on utilise comme esters d'acides dicarboxyliques α,β-insaturées des maléates et/ou fumarates.

4. Procédé selon les revendications 1—3, caractérisé en ce qu'on utilise des α-oléfines à chaîne droite.

5. Procédé selon les revendications 1—4, caractérisé en ce qu'on ajoute de 0,005 à 0,05 mole de catalyseur peroxydique par mole de monomère.

6. Procédé selon les revendications 1—5, caractérisé en ce que le catalyseur peroxydique est ajouté par portions selon une certaine périodicité.

7. Procédé selon la revendication 6, caractérisé en ce que la copolymérisation est amorcée par addition d'un tiers de la quantité totale du catalyseur peroxydique, le reste de catalyseur peroxydique étant ajouté en 8—12 portions.

8. Procédé selon les revendications 1—7, caractérisé en ce qu'on utilise comme esters d'acides dicarboxyliques α,β-insaturés des esters dioctyliques d'acides dicarboxyliques α,β-insaturés et/ou des esters dihexyliques d'acides dicarboxyliques α,β-insaturés.

9. Procédé selon les revendications 1—8, caractérisé en ce que la température de réaction est de 160 à 200°C.

10. Procédé selon les revendications 1—9, caractérisé en ce que l'α-oléfine et l'ester d'acide dicarboxylique α,β-insaturé sont utilisés selon un rapport en moles de 0,5—7.

11. Procédé selon les revendications 6—10, caractérisé en ce qu'on ajoute comme agents de réticulation des bismaléates de dialcool, des bismaléinimides, du diallyléther, un ester diallylique, un ester divinylique et/ou du divinyléther.

12. Utilisation des copolymères selon les revendications 1—11 comme huiles lubrifiantes.

13. Utilisation des copolymères selon les revendications 1—11 comme additifs pour huiles minérales.

14. Utilisation des copolymères selon les revendications 1—11 comme additifs pour lubrifiants.

15. Utilisation des copolymères selon les revendications 1—11 comme lubrifiants ou produits de démoulage pour la mise en oeuvre de moulages de matières thermoplastiques.

16. Utilisation des copolymères selon les revendications 1—11 comme huiles pour transformateurs.

**Claims for the contracting States: BE CH FR GB IT LI LU NL SE**

1. Copolymers composed of alpha-olefins having 10—16 carbon atoms, either pure or mixed, and of alpha-beta unsaturated dicarboxylic acid esters, whose alcohol components are straight-chained and/or branched monoalcohols having 3—10 carbon atoms, and optionally cross-linked and with a pour point of between −60°C and 0°C, which in the case of uncrosslinked copolymers is −9°C or lower if the alcohols have 4 or less carbon atoms, and is −20°C or lower if the alcohols have more than 4 carbon atoms.

2. Copolymers according to Claim 1, characterised in that the alpha-beta unsaturated dicarboxylic acid esters are alpha-beta unsaturated dicarboxylic acid diesters.

3. Copolymers according to Claims 1 and 2, characterised in that the alpha-beta unsaturated dicarboxylic acid esters are maleic esters and/or fumaric acid esters.

4. Copolymers according to Claims 1 to 3, characterised in that the alpha-olefins are unbranched.

5. Copolymers according to Claims 1 and 4, characterised in that the molar ratio of alpha-olefin to alpha-beta unsaturated dicarboxylic acid esters is 0.5—4.

6. A method of preparing the copolymers composed of alpha-beta unsaturated dicarboxylic acid esters with alpha-olefins according to Claims 1 to 5, characterised in that alpha-olefins having 10—16 carbon atoms and alpha-beta unsaturated dicarboxylic acid esters, whose alcohol components are straight-chained and/or branched monoalcohols having 3—10 carbon atoms, are copolymerised, optionally with the addition of cross-linking agents, at temperatures of from 140—210°C and in the presence of peroxide catalyst in an inert gas atmosphere.

7. A method according to Claim 6, characterised in that as alpha-beta unsaturated dicarboxylic acid esters there are used alpha-beta unsaturated dicarboxylic acid diesters as monomer.

8. A method according to Claims 6 and 7, characterised in that as alpha-beta unsaturated dicarboxylic acid esters maleic acid esters and/or fumaric acid esters are used.

9. A method according to Claims 6 to 8, characterised in that unbranched alpha-olefins are used.

10. A method according to Claims 6 to 9, characterised in that 0.005 mol/mol monomer to 0.05 mol/monomer of peroxide catalyst are added.

11. A method according to Claims 6 to 10, characterised in that portions of the peroxide catalyst are added at intervals.

12. A method according to Claim 11, characterised in that the copolymerisation is started by adding a third of the total quantity of peroxide catalyst and the remainder of the peroxide catalyst is added in 8—12 portions.

13. A method according to Claims 6 to 12, characterised in that the alpha-beta unsaturated dicarboxylic acid dioctyl esters and/or alpha-beta unsaturated dicarboxylic acid dihexyl esters are used as alpha-beta unsaturated dicarboxylic acid esters.

14. A method according to Claims 6 to 13, characterised in that the reaction temperature is 160—200°C.

15. A method according to Claims 6 to 14, characterised in that alpha-olefin and alpha-beta unsaturated dicarboxylic acid esters are used in a molar ratio of 0.5—7.

16. A method according to Claims 6 to 15, characterised in that bis-maleates of dialcohols, bis-maleinimides, diallyl ethers, diallyl esters, divinyl esters and/or divinyl ethers are added as cross-linking agents.

17. Use of the copolymers according to Claims 1 to 4 as lubricating oils.

18. Use of the copolymers according to Claims 1 to 4 as mineral oil additives.

19. Use of the copolymers according to Claims 1 to 4 as lubricant oil additives.

20. Use of the copolymers according to Claims 1 to 4 as lubricants for the shaping or moulding of thermoplastic synthetic materials.

21. Use of the copolymers according to Claims 1 to 4 as transformer oils.

**Claims for the contracting State: AT**

1. A method of preparing copolymers composed of alpha-beta unsaturated dicarboxylic acid esters with alpha-olefins having a pour point of between −60° and 0°C, characterised in that alpha-olefins having 10—16 carbon atoms and alpha-beta unsaturated dicarboxylic acid esters, whose alcohol components are straight-chained and/or branched monoalcohols having 3—10 carbon atoms, are copolymerised, optionally with the addition of cross-linking agents, at temperatures of from 140—210°C and in the presence of peroxide catalyst in an inert gas atmosphere.

2. A method according to Claim 1, characterised in that as alpha-beta unsaturated dicarboxylic acid esters there are used alpha-beta unsaturated dicarboxylic acid diesters as monomer.

3. A method according to Claims 1 and 2, characterised in that as alpha-beta unsaturated dicarboxylic acid esters maleic acid esters and/or fumaric acid esters are used.

4. A method according to Claims 1 to 3, characterised in that unbranched alpha-olefins are used.

5. A method according to Claims 1 to 4, characterised in that 0.005 mol/mol monomer to 0.05 mol/monomer of peroxide catalyst are added.

6. A method according to Claims 1 to 5, characterised in that portions of the peroxide catalyst are added at intervals.

7. A method according to Claim 6, characterised in that the copolymerisation is started by adding a third of the total quantity of peroxide catalyst and the remainder of the peroxide catalyst is added in 8—12 portions.

8. A method according to Claims 1 to 7, characterised in that the alpha-beta unsaturated dicarboxylic acid dioctyl esters and/or alpha-beta unsaturated dicarboxylic acid dihexyl esters are used as alpha-beta unsaturated dicarboxylic acid esters.

9. A method according to Claims 1 to 8, characterised in that the reaction temperature is 160—200°C.

10. A method according to Claims 1 to 9, characterised in that alpha-olefin and alpha-beta unsaturated dicarboxylic acid esters are used in a molar ratio of 0.5—7.

11. A method according to Claims 6 to 10, characterised in that bis-maleates of dialcohols, bis-maleinimides, diallyl ethers, diallyl esters, divinyl esters and/or divinyl ethers are added as cross-linking agents.

12. Use of the copolymers according to Claims 1 to 11 as lubricating oils.

13. Use of the copolymers according to Claims 1 to 11 as mineral oil additives.

14. Use of the copolymers according to Claims 1 to 11 as lubricant oil additives.

15. Use of the copolymers according to Claims 1 to 11 as lubricants for the shaping or moulding of thermoplastic synthetic materials.

16. Use of the copolymers according to Claims 1 to 11 as transformer oils.